# EUROPEAN PATENT SPECIFICATION

(11) **EP 4 016 752 B1**
(45) Date of publication and mention of the grant of the patent: **14.06.2023**
(21) Application number: 20894296.1
(22) Date of filing: 03.11.2020
(51) Int. Cl.: H01R 13/24, H04M 1/02, G03B 17/04

(54) **ELASTIC PIECE ASSEMBLY AND ELECTRONIC DEVICE HAVING ELASTIC PIECE ASSEMBLY**
ELASTISCHE STÜCKANORDNUNG UND ELEKTRONISCHE VORRICHTUNG MIT EINER ELASTISCHEN STÜCKANORDNUNG
ENSEMBLE DE PIÈCES ÉLASTIQUES ET DISPOSITIF ÉLECTRONIQUE COMPORTANT UN ENSEMBLE DE PIÈCES ÉLASTIQUES

(30) Priority: 25.11.2019 CN 201911164728
(43) Date of publication of application: 22.06.2022
(73) Proprietor: Honor Device Co., Ltd., Shenzhen, Guangdong 518040 (CN)
(72) Inventor: FAN, Xuanrui, Shenzhen, Guangdong 518129 (CN); TAN, Zhengping, Shenzhen, Guangdong 518129 (CN); HUANG, Qiang, Shenzhen, Guangdong 518129 (CN); YUAN, Leibo, Shenzhen, Guangdong 518129 (CN); LIU, Chao, Shenzhen, Guangdong 518129 (CN); YAO, Wenxing, Shenzhen, Guangdong 518129 (CN)
(74) Representative: Isarpatent
(86) International application number: PCT/CN2020/126138
(87) International publication number: WO 2021/103956

(56) References cited:
- CN-A- 106 454 601
- CN-A- 109 616 817
- CN-A- 109 616 817
- CN-A- 110 233 915
- CN-A- 110 233 915
- CN-A- 111 129 827
- CN-U- 204 167 558
- CN-U- 204 243 256
- US-A1- 2006 160 423

## Description

### TECHNICAL FIELD

This application relates to the field of electronic devices, and in particular, to an elastic piece assembly and an electronic device with an elastic piece assembly.

### BACKGROUND

With the development of communications technologies, electronic devices such as smartphones and tablet computers are playing an increasingly important role in people's daily life. Components inside the electronic device need to be connected to each other, and the connection between the components is required to be stable to meet requirements for resistance, stability, and the like. Therefore, a conductive elastic piece is arranged inside the electronic device, and the components are connected by using the elastic piece. As a connecting medium between different media or electronic circuits, the elastic piece can be used to enable connection of electric signals, connection of antennas or grounding connection.

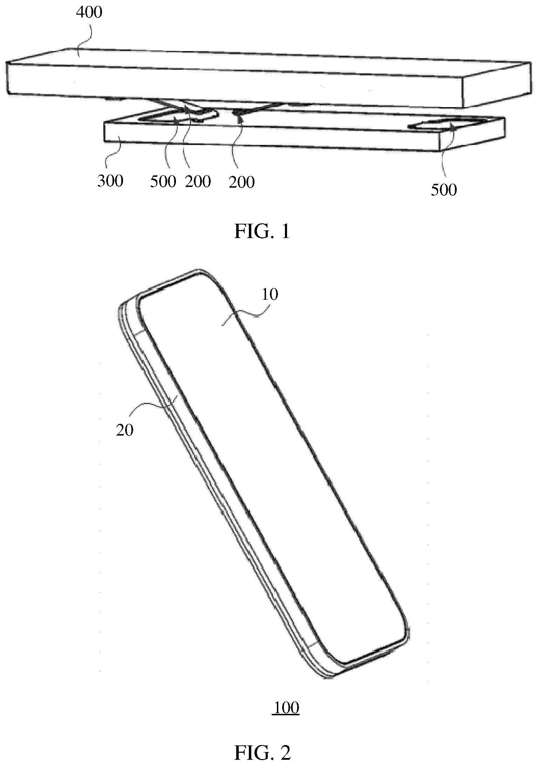

FIG. 1 is a schematic diagram of a structure in which relatively moving components are electrically connected to each other by using elastic pieces in the prior art. As shown in FIG. 1, the structure includes a first component, a second component and two elastic pieces. One end of each of the elastic pieces is arranged on the first component, and the other end of each of the elastic pieces is a free end and is bent toward the second component. Two connecting contacts are arranged on the second component, and the two connecting contacts are located in a direction of relative movement of the first component and the second component. A bend apex of the first elastic piece is in contact with the first connecting contact. With relative movement of the first component and the second component, the bend apex of the first elastic piece is out of contact with the first connecting contact until a bend apex of the second elastic piece moves and comes into contact with the second connecting contact.

However, it is difficult to control deformation of the elastic pieces. When an elastic force of the elastic pieces is small, the contact is unstable. When the elastic force is large, friction between the first component and the second component will increase, thereby affecting relative sliding between the first component and the second component.

CN 110233915A discloses an electronic device which may be a full screen electronic device that includes a housing and a camera assembly.

CN 204167558U discloses a card connector which comprises an insulation body, a plurality of first terminal grooves arranged on the front end of the bottom wall of the insulation body and penetrating through the front-end face of the bottom wall.

### SUMMARY

This application provides an elastic piece assembly and an electronic device with an elastic piece assembly, as defined in the appended set of claims, so that deformation of each conductive elastic piece can be controlled to ensure that an electrical contact section of the conductive elastic piece has enough elasticity to be in contact with an electrical contact assembly, and the conductive elastic piece is prevented from affecting relative sliding between a first component and a second component.

In this application, the two ends of each of the conductive elastic pieces are connected to the support, so that deformation of the conductive elastic piece is controlled to ensure that the electrical contact section of the conductive elastic piece has enough elasticity to be in contact with the electrical contact assembly, and the conductive elastic piece is prevented from affecting relative sliding between the support and a metal middle plate.

In this application, the fixed end is fixedly connected to the support, so that the conductive elastic piece can be reliably connected to the support. The electrical contact section connected to the fixed end is configured to be in electrical contact with the electrical contact assembly, to connect the conductive elastic piece to the electrical contact assembly. The connecting end connected to the electrical contact section moves relative to the support to limit the protrusion height of the electrical contact section relative to the support.

The accommodating grooves are provided to accommodate the conductive elastic pieces, so that part or all of the fixed end and the connecting end of each of the conductive elastic pieces is located in the accommodating groove, and a bending point in the electrical contact section can extend out of the accommodating groove.

The accommodating groove includes a first accommodating part, a guide part and a second accommodating part that communicate with each other in sequence, the fixed end is located in the first accommodating part and connected to the first accommodating part, and the connecting end is located in the second accommodating part. This facilitates installation of the conductive elastic piece and can prevent reverse installation of the conductive elastic piece.

The extended sections are arranged in the second accommodating part, the connecting end is provided with the extended buckles, and the extended buckles each are located in the extended section and match the extended section, so that the extended buckle can move in the extended section in the first direction to limit deformation of the conductive elastic piece. This enables the support to slide smoothly, and ensures conductive stability of the conductive elastic piece.

The first inclined part and the second inclined part are arranged on the electrical contact section to serve as a buffer for the conductive elastic piece in a sliding process, so that the first contact part gradually slides to a position in contact with the electrical contact assembly. An included angle between the first inclined part and a plane where the fixed end is located is greater than or equal to 10° and less than or equal to 70°, and an included angle between the second inclined part and a plane where the fixed end is located is greater than or equal to 10° and less than or equal to 70°. Larger included angles indicate a better buffering effect on the conductive elastic piece in the sliding process.

The two conductive elastic pieces are staggered in the first direction, such that the first contact parts of the two conductive elastic pieces are in contact with different positions of the electrical contact assembly, respectively. In this way, wear of the electrical contact assembly and the conductive elastic piece can be prevented, and service lives of the electrical contact assembly and the conductive elastic piece can be prolonged.

To prevent interference between the positioning part and the bent part, the positioning notch and the bent part on the conductive part are located on different sides of the conductive part respectively.

A larger included angle between the guide edge and the second contact part indicates a better buffering effect.

This application provides the elastic piece assembly and the electronic device with an elastic piece assembly. In the elastic piece assembly, the two ends of each of the conductive elastic pieces are connected to the support, so that deformation of the conductive elastic piece is controlled to ensure that the electrical contact section of the conductive elastic piece has enough elasticity to be in contact with the electrical contact assembly, and the conductive elastic piece is prevented from affecting relative sliding between the first component and the second component.

### BRIEF DESCRIPTION OF DRAWINGS

FIG. 1 is a schematic diagram of a structure in which relatively moving components are electrically connected to each other by using elastic pieces in the prior art;
FIG. 2 is a schematic structural diagram of an electronic device according to an embodiment of this application;
FIG. 3 is a side view of an electronic device according to an embodiment of this application;
FIG. 4 is an exploded view of an electronic device according to an embodiment of this application;
FIG. 5 is a schematic structural diagram of a conductive elastic piece in an electronic device according to an embodiment of this application;
FIG. 6 is a schematic structural diagram of a conductive elastic piece and a support in an electronic device according to an embodiment of this application;
FIG. 7 is a schematic structural diagram of a conductive elastic piece and a support in another direction in an electronic device according to an embodiment of this application;
FIG. 8 is an arrangement diagram of conductive elastic pieces in an electronic device according to an embodiment of this application;
FIG. 9 is a schematic internal structural diagram of a housing in an electronic device according to an embodiment of this application;
FIG. 10 is a partial enlarged diagram of a position C in FIG. 9;
FIG. 11 is a schematic structural diagram of a conductive part of an electrical contact assembly in an electronic device according to an embodiment of this application;
FIG. 12 is a first schematic diagram of a first state of a conductive elastic piece and an electrical contact assembly in an electronic device according to an embodiment of this application;
FIG. 13 is a second schematic diagram of a first state of a conductive elastic piece and an electrical contact assembly in an electronic device according to an embodiment of this application;
FIG. 14 is a third schematic diagram of a first state of a conductive elastic piece and an electrical contact assembly in an electronic device according to an embodiment of this application;
FIG. 15 is a first schematic diagram of a second state of a conductive elastic piece and an electrical contact assembly in an electronic device according to an embodiment of this application;
FIG. 16 is a second schematic diagram of a second state of a conductive elastic piece and an electrical contact assembly in an electronic device according to an embodiment of this application;
FIG. 17 is a third schematic diagram of a second state of a conductive elastic piece and an electrical contact assembly in an electronic device according to an embodiment of this application;
FIG. 18 is a first schematic diagram of a third state of a conductive elastic piece and an electrical contact assembly in an electronic device according to an embodiment of this application;
FIG. 19 is a second schematic diagram of a third state of a conductive elastic piece and an electrical contact assembly in an electronic device according to an embodiment of this application;
FIG. 20 is a third schematic diagram of a third state of a conductive elastic piece and an electrical contact assembly in an electronic device according to an embodiment of this application;
FIG. 21 is a schematic structural diagram of a conductive elastic piece and a support in an electronic device according to an embodiment of this application;
FIG. 22 is a schematic structural diagram of a conductive elastic piece in an electronic device according to an embodiment of this application;
FIG. 23 is a schematic structural diagram of a conductive elastic piece and a support in an electronic device according to an embodiment of this application;
FIG. 24 is a schematic structural diagram of a conductive elastic piece in an electronic device according to an embodiment of this application;
FIG. 25 is a cross-sectional view taken along F-F in FIG. 23;
FIG. 26 is a schematic internal structural diagram of an electronic device according to an embodiment of this application;
FIG. 27 is a schematic structural diagram of a middle frame in an electronic device according to an embodiment of this application; and
FIG. 28 is a schematic structural diagram of a middle frame in another direction in an electronic device according to an embodiment of this application.

Description of reference numerals:
100: mobile phone; 10: display screen; 20: housing; 21: rear cover; 22: middle frame; 23: accommodating chamber; 24: sliding housing; 221: metal middle plate; 222: bezel; 2221: through hole; 30: camera assembly; 40: elastic piece assembly; 41: support; 411: accommodating groove; 4111: first accommodating part; 4112: guide part; 4113: second accommodating part; 4114: extended section; 412: stepped surface; 42: electrical contact assembly; 421: mounting frame; 4211: positioning part; 422: conductive part; 4221: positioning notch; 4222: bent part; 4223: second contact part; 4224: guide edge; 43: conductive elastic piece; 431: electrical contact section; 4311: first inclined part; 4312: first contact part; 4313: second inclined part; 432: fixed end; 4321 mounting hole; 4322: protruding point; 433: connecting end; 4331: extended buckle;
200: elastic piece; 300: first component; 400: second component; 500: connecting contact.

### DESCRIPTION OF EMBODIMENTS

Terms used in the implementations of this application are only used to explain specific embodiments of this application, but are not intended to limit this application. Implementations of embodiments of this application are described in detail with reference to the accompanying drawings.

An embodiment of this application provides an electronic device, including but not limited to a mobile or fixed terminal with a display screen and a housing, such as a mobile phone, a tablet computer, a notebook computer, an ultra-mobile personal computer (ultra-mobile personal computer, UMPC), a netbook, a POS machine, a personal digital assistant (personal digital assistant, PDA), a wearable device and a virtual reality device.

FIG. 1 is a schematic diagram of a structure in which relatively moving components are electrically connected to each other by using elastic pieces in the prior art. As shown in FIG. 1, the structure includes a first component 300, a second component 400 and two elastic pieces 200. One end of each of the elastic pieces 200 is arranged on the first component 300, and the other end of each of the elastic pieces 200 is a free end and is bent toward the second component 400. Two connecting contacts 500 are arranged on the second component 400, and the two connecting contacts 500 are located in a direction of relative movement of the first component 300 and the second component 400. A bend apex of the first elastic piece 200 is in contact with the first connecting contact 500. With relative movement of the first component 300 and the second component 400, the bend apex of the first elastic piece 200 is out of contact with the first connecting contact 500 until a bend apex of the second elastic piece 200 moves and comes into contact with the second connecting contact 500. However, it is difficult to control deformation of the elastic pieces 200. When an elastic force of the elastic pieces 200 is small, the contact is unstable. When the elastic force is large, friction between the first component 300 and the second component 400 will increase, thereby affecting relative sliding between the first component 300 and the second component 400.

To resolve the foregoing problems, an embodiment of this application provides an electronic device. When a support 41 in the electronic device is located in an accommodating chamber 23, an electrical contact section 431 on a first conductive elastic piece 43 on the support 41 is in contact with an electrical contact assembly 42. A driving assembly drives the support 41 to slide, so that the second component 400 on the support 41 extends out of the accommodating chamber 23 through the through hole 2221. In the process in which the second component 400 extends out of the accommodating chamber 23, the electrical contact section 431 on the first conductive elastic piece 43 is gradually out of contact with the electrical contact assembly 42 until the electrical contact section 431 on the second conductive elastic piece 43 on the support 41 comes into contact with the electrical contact assembly 42, so that the second component 400 is still electrically connected to a battery of a mobile phone 100. Two ends of each of the conductive elastic pieces 43 are connected to the support 41, so that deformation of the conductive elastic piece 43 is controlled to ensure that the electrical contact section 431 of the conductive elastic piece 43 has enough elasticity to be in contact with the electrical contact assembly 42, and the conductive elastic piece 43 is prevented from affecting relative sliding between the second component 400 and the first component 300.

The electronic device according to this application is described in detail by using the following specific embodiments, which can be combined with each other. The same or similar contents are not described in different embodiments again. For ease of description, the mobile phone 100 is used as an example of the terminal to describe the following embodiments in detail.

### Embodiment 1

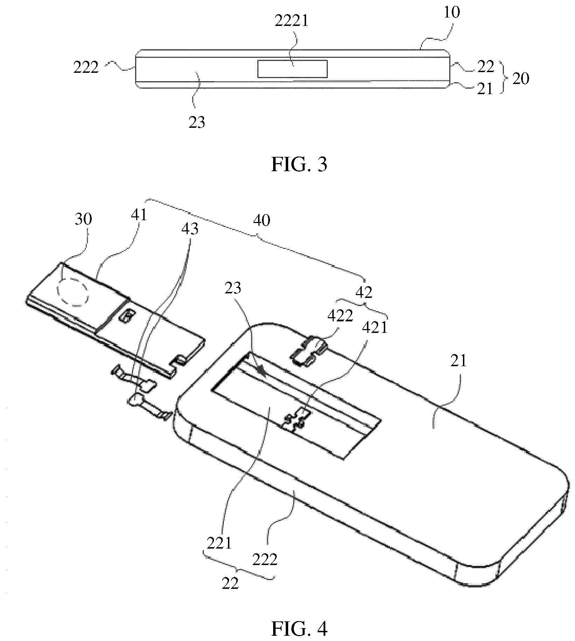

FIG. 2 is a schematic structural diagram of an electronic device according to an embodiment of this application; and FIG. 3 is a side view of an electronic device according to an embodiment of this application. As shown in FIG. 2 and FIG. 3, the mobile phone 100 according to this embodiment of this application may include a display screen 10, a housing 20, and a camera assembly 30. The display screen 10 is connected to the housing 20, and the camera assembly 30 is located on the housing 20.

The display screen 10 may be an organic light-emitting diode (organic light-emitting diode, OLED) display screen or a liquid crystal display (liquid crystal display, LCD). It should be understood that the display screen 10 may include a display and a touch device. The display is configured to output display content to a user, and the touch device is configured to receive a touch event input by the user on the display screen 10.

The housing 20 may include a rear cover 21 and a middle frame 22. The middle frame 22 is located between the display screen 10 and the rear cover 21. The display screen 10 is connected to one side of the middle frame 22, and the rear cover 21 is connected to the other side of the middle frame 22. The display screen 10, the rear cover 21 and the middle frame 22 jointly enclose the accommodating chamber 23. The accommodating chamber 23 contains a battery, a circuit board, a communications module (not shown in the figure), and the like.

When the battery is arranged on the middle frame 22, for example, a battery compartment may be arranged on one side of the middle frame 22 facing the rear cover 21, and the battery is installed in the battery compartment. In this embodiment of this application, the battery can be connected to a charging management module and the circuit board by using a power management module, and the power management module receives an input of the battery and/or the charging management module and supplies power to the processor, an internal memory, an external memory, the display screen 10, the camera assembly 30, the communications module, and the like. The power management module may be further configured to monitor battery capacity, battery cycle times, battery health statuses (leakage and impedance) and other parameters. In some other embodiments, the power management module may alternatively be disposed in the processor of the circuit board. In some other embodiments, the power management module and the charging management module may alternatively be arranged in the same device.

The middle frame 22 may include a metal middle plate 221 and a bezel 222. One round of bezel 222 is disposed around an edge of the metal middle plate 221. When the assembly is completed, the bezel 222 is located between the display screen 10 and the rear cover 21, and the bezel 222 is exposed to the outside. The display screen 10, the rear cover 21 and the bezel 222 jointly enclose the accommodating chamber 23, and the middle frame 22 is located in the accommodating chamber 23.

In this embodiment of this application, the material of the metal middle plate 221 may include, but is not limited to, aluminum alloy, stainless steel, a steel-aluminum composite die-casting plate or titanium alloy. The bezel 222 may be a metal bezel, or the bezel 222 may alternatively be a non-metal bezel, such as a ceramic bezel or a glass bezel. When the bezel 222 is a metal bezel, the material of the metal bezel includes, but is not limited to, aluminum alloy, stainless steel or titanium alloy. The rear cover 21 may be a metal rear cover, a glass rear cover, a plastic rear cover or a ceramic rear cover. In this embodiment of this application, the material of the rear cover 21 is not limited.

Specifically, the first component 300 may be the housing 20 and the second component 400 may be the camera assembly 30. The camera assembly 30 may include a front camera and/or a rear camera, a flash, a miniature projection apparatus, and the like. Details are not described herein again. In some embodiments, the camera assembly 30 may be located in the accommodating chamber 23. For example, the front camera is disposed in the accommodating chamber 23, and when in use, by sliding the front camera, the front camera slides relative to the housing 20, so that the front camera extends out of the accommodating chamber 23, so as to perform operations such as photographing or video shooting. The front camera is hidden in the accommodating chamber 23, so that a screen-to-body ratio is increased, which makes it easier to obtain a good visual impression in the appearance design of the mobile phone 100. The rear camera may alternatively be disposed in the accommodating chamber 23, and when in use, by sliding the rear camera, the rear camera slides relative to the housing 20, so that the rear camera extends out of the accommodating chamber 23, so as to perform operations such as photographing or video shooting.

FIG. 4 is an exploded view of an electronic device according to an embodiment of this application. As shown in FIG. 3 and FIG. 4, in this embodiment of this application, to enable the camera assembly 30 to maintain electrical contact with the battery and the circuit board in the accommodating chamber 23 after sliding out of the accommodating chamber 23 relative to the housing 20, the mobile phone 100 may further include an elastic piece assembly 40.

Specifically, the elastic piece assembly 40 includes a support 41, an electrical contact assembly 42 and at least two conductive elastic pieces 43. The electrical contact assembly 42 is connected to the housing 20, and the support 41 is connected to the camera assembly 30.

Two ends of each of the conductive elastic pieces 43 are connected to the support 41, the conductive elastic piece 43 is provided with an electrical contact section 431 bent toward the electrical contact assembly 42, and the electrical contact section 431 is located between two end portions of the conductive elastic piece 43; the conductive elastic pieces 43 are separately and sequentially arranged in the first direction, and when the housing 20 and the camera assembly 30 slide relatively, the electrical contact assembly 42 abuts against the electrical contact sections of different conductive elastic pieces 43 to connect the electrical contact assembly 42 to the conductive elastic pieces 43.

In the foregoing elastic piece assembly 40, the electrical contact assembly 42 is connected to the circuit board in the housing 20, the circuit board is connected to the battery, the circuit board in the housing 20 supplies power to the electrical contact assembly 42, and when the camera assembly 30 and the housing 20 slide relatively, or when the camera assembly 30 and the housing 20 are both in a relatively static state, the electrical contact assembly 42 is kept in a charged state.

To fix the camera assembly 30, the elastic piece assembly 40 may further include a support 41, and the support 41 supports the camera assembly 30. To connect the camera assembly 30 to the support 41 conveniently, a first connecting part may be disposed on the support 41 and a second connecting part may be disposed on the camera assembly 30, and the first connecting part is connected to the second connecting part through bonding, clamping or screw connection, or the like, so that the camera assembly 30 is installed on the support 41. The material of the support 41 may be the same as that of the bezel 222, and the material of the support 41 may alternatively be different from that of the bezel 222. This is not limited in this embodiment.

Specifically, the support 41 may be divided into two parts, which are an upper half of the support 41 and a lower half of the support 41. The camera assembly 30 is located on the upper half of the support 41, and the upper half of the support 41 can extend out of the accommodating chamber 23 to drive the camera assembly 30 to extend out of the accommodating chamber 23. The lower half of the support 41 is configured to be connected to the conductive elastic piece 43, and when the camera assembly 30 slides relative to the housing 20, the lower half of the support 41 is located in the accommodating chamber 23. This prevents a situation that the conductive elastic piece 43 located in the lower half of the support 41 extends out of the accommodating chamber 23 and is corroded by water vapor and the like outside the accommodating chamber 23, thereby affecting conductive performance of the conductive elastic piece 43. The camera assembly 30 can be embedded in the upper half of the support 41, so as to avoid increasing the overall thickness of the mobile phone 100, and the camera assembly 30 can be reliably connected in the support 41. Because the camera assembly 30 is disposed in the upper half of the support 41, a thickness of the upper half of the support 41 may be greater than that of the lower half of the support 41. A stepped surface 412 is formed due to a thickness difference at a joint between the upper half of the support 41 and the lower part of the support 41. The stepped surface 412 can also be used as a limiting part for the camera assembly 30 to extend out of the accommodating chamber 23. An abutting part may be disposed in the accommodating chamber 23. When the stepped surface 412 moves to the abutting part of the accommodating chamber 23, the stepped surface 412 abuts against the abutting part, thereby preventing the support 41 from continuing movement. In this case, the camera assembly 30 is completely removed from the accommodating chamber 23.

To enable the support 41 to slide smoothly and extend out of the accommodating chamber 23, the bezel 222 is provided with a through hole 2221 for the support 41 to enter or exit the accommodating chamber 23. The support 41 extends out of the accommodating chamber 23 through the through hole 2221, and the support 41 drives the camera assembly 30 to extend out of the accommodating chamber 23 through the through hole 2221. The through hole 2221 is located in the bezel 222. That is, the support 41 slides relative to the metal middle plate 221 so that the camera assembly 30 slides relative to the housing 20. A driving assembly may be disposed in the accommodating chamber 23, the driving assembly may be disposed on the metal middle plate 221, and the support 41 may be connected to the driving assembly in the accommodating chamber 23. The support 41 is driven by the driving assembly to slide to extend out of or enter the accommodating chamber 23. The driving assembly may include an electromagnetic telescopic motor. To enable the support 41 to slide smoothly, a guide rail may further be disposed in the accommodating chamber 23. Other driving assemblies may alternatively be used to drive the support 41 to extend out of or enter the accommodating chamber 23. This is not limited in this embodiment.

Specifically, an inner sidewall of the through hole 2221 matches an outer sidewall of the support 41. For example, if the through hole 2221 is a circular hole, the support 41 is at least partially cylindrical, and an outer diameter of the support 41 is equal to an inner diameter of the through hole 2221. Alternatively, when the through hole 2221 is an elongated hole, the support 41 is at least partially a quadrangular prism, and the cross section of the support 41 perpendicular to an axial direction of the support 41 is the same as a plane enclosed by an inner contour of the through hole 2221. This prevents a situation that when the support 41 slides in and out of the accommodating chamber 23, foreign matter enters the accommodating chamber 23, which damages other parts in the accommodating chamber 23 or blocks the support 41, making it difficult for the support 41 to smoothly enter and exit the accommodating chamber 23. When the support 41 slides into the accommodating chamber 23, an end face of the support 41 facing an outer side of the accommodating chamber 23 is flush with an outer side face of the bezel 222, which makes it easier to obtain a good visual impression in the appearance design of the mobile phone 100.

The conductive elastic pieces 43 are separately and sequentially arranged in the first direction. The first direction is a direction of sliding of the support 41 relative to the bezel 222, which is also a direction in which the support 41 slides out of or enters the bezel 222. Each of the conductive elastic pieces 43 is connected to the support 41, and each of the conductive elastic pieces 43 is electrically connected to the camera assembly 30. For example, the first conductive elastic piece 43 is connected to the front camera in the camera assembly 30, the second conductive elastic piece 43 is connected to the rear camera in the camera assembly 30, the second conductive elastic piece 43 is connected to the front camera in the camera assembly 30, and the third conductive elastic piece 43 is connected to the flash in the camera assembly 30. The first conductive elastic piece 43 may be connected to the camera assembly 30 by using a wire, and the conductive elastic piece 43 may be connected to the camera assembly 30 by using a metal sheet. This is not limited in this embodiment.

In the mobile phone 100 according to this embodiment of this application, when the support 41 is located in the accommodating chamber 23, the electrical contact section 431 on the first conductive elastic piece 43 on the support 41 is in contact with an electrical contact assembly 42. The driving assembly drives the support 41 to slide, so that the camera assembly 30 on the support 41 extends out of the accommodating chamber 23 through the through hole 2221. In the process in which the camera assembly 30 extends out of the accommodating chamber 23, the electrical contact section 431 on the first conductive elastic piece 43 is gradually out of contact with the electrical contact assembly 42 until the electrical contact section 431 on the second conductive elastic piece 43 on the support 41 comes into contact with the electrical contact assembly 42, so that the camera assembly 30 is still electrically connected to the battery of the mobile phone 100, and the camera assembly 30 to perform photographing or video shooting. The two ends of each of the conductive elastic pieces 43 are connected to the support 41, so that deformation of the conductive elastic piece 43 is controlled to ensure that the electrical contact section 431 of the conductive elastic piece 43 has enough elasticity to be in contact with the electrical contact assembly 42, and the conductive elastic piece 43 is prevented from affecting relative sliding between the support 41 and the metal middle plate 221.

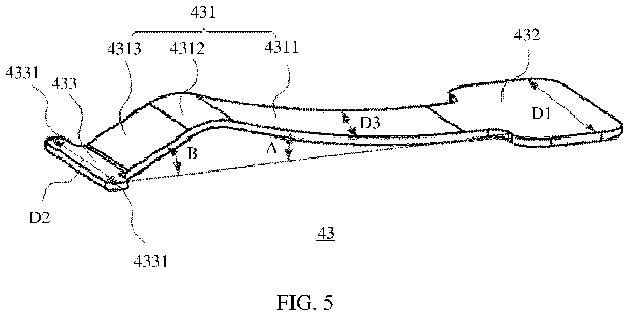

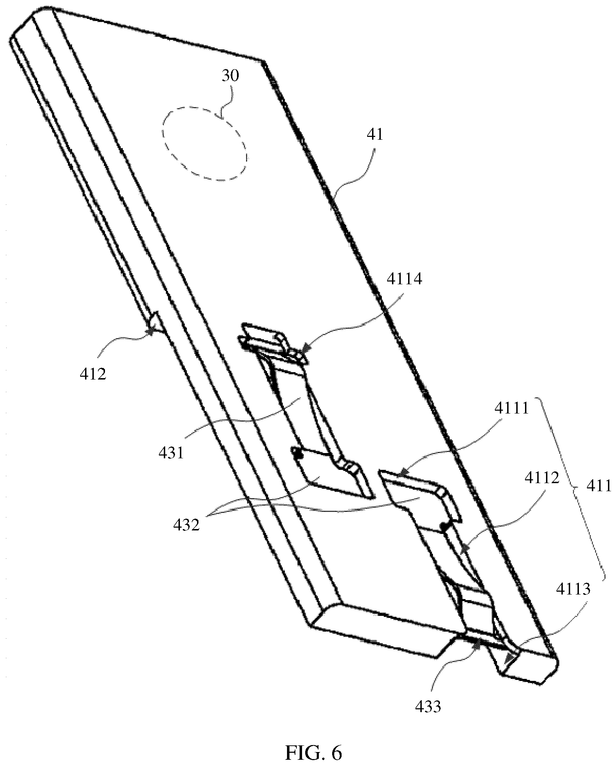

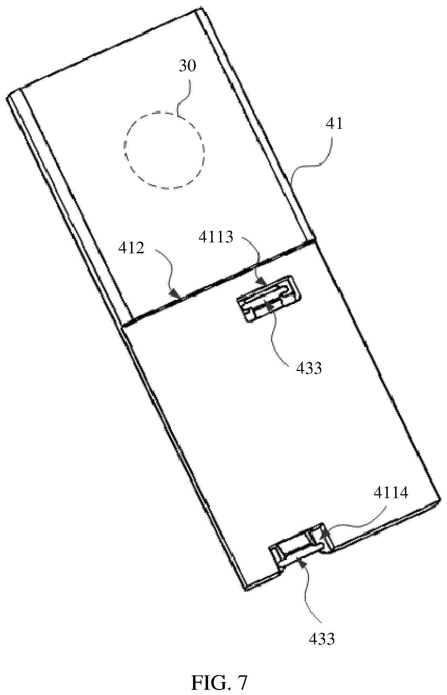

FIG. 5 is a schematic structural diagram of a conductive elastic piece in an electronic device according to an embodiment of this application; FIG. 6 is a schematic structural diagram of a conductive elastic piece and a support in an electronic device according to an embodiment of this application; and FIG. 7 is a schematic structural diagram of a conductive elastic piece and a support in another direction in an electronic device according to an embodiment of this application. As shown in FIG. 4 to FIG. 7, in this embodiment, the conductive elastic piece 43 includes a fixed end 432 fixedly connected to the support 41 and a connecting end 433 movably connected to the support 41, and the electrical contact section 431 protrudes toward the electrical contact assembly 42. The connecting end 433 can move relative to the support 41 to limit the protrusion height of the electrical contact section 431 relative to the support 41.

Specifically, the conductive elastic piece 43 may be divided into three sections that are connected in sequence. The first section of the conductive elastic piece 43 is the fixed end 432, and the fixed end 432 is fixedly connected to the support 41. The second section of the conductive elastic piece 43 is the electrical contact section 431, and the electrical contact section 431 is in electrical contact with the electrical contact assembly 42. The third section of the conductive elastic piece 43 is the connecting end 433, and the connecting end 433 is movably connected to the support 41, that is, the connecting end 433 can move relative to the support 41 to limit the protrusion height of the electrical contact section 431 relative to the support 41. The fixed end 432, the electrical contact section 431 and the connecting end 433 are connected in sequence.

To reliably connect the fixed end 432 to the support 41, the fixed end 432 may be flat to increase a contact surface between the fixed end 432 and the support 41. The fixed end 432 may be fixedly connected to the support 41 by using a screw, welding or bonding. The electrical contact section 431 may be a bent part of the conductive elastic piece 43, the conductive elastic piece 43 is bent toward the electrical contact section 431, and a bending point in the electrical contact section 431 is in pressure contact with the electrical contact assembly 42. The bending point in the electrical contact section 431 may also be called a contact, and the contact is in pressure contact with the electrical contact assembly 42 to connect the conductive elastic piece 43 to the electrical contact assembly 42. The connecting end 433 is movably connected to the support 41. When the bending point in the electrical contact section 431 is in pressure contact with the electrical contact assembly 42, a distance between the conductive elastic piece 43 and the electrical contact assembly 42 is minimum. When the electrical contact assembly 42 is kept fixed, the connecting end 433 of the conductive elastic piece 43 moves along the support 41 to compress the conductive elastic piece 43 to lower the height of the conductive elastic piece 43, so that the distance between the conductive elastic piece 43 and the electrical contact assembly 42 is reduced. With the movement of the support 41, the bending point in the electrical contact section 431 is separated from the position in pressure contact with the electrical contact assembly 42. In this case, the connecting end 433 of the conductive elastic piece 43 moves along the support 41 in a direction opposite to a direction in which the conductive elastic piece 43 is compressed, and the conductive elastic piece 43 extends to restore the height of the conductive elastic piece 43 in the extended state, so that the distance between the conductive elastic piece 43 and the electrical contact assembly 42 is maximum. Through the change in the distance between the conductive elastic piece 43 and the electrical contact assembly 42, the protrusion height of the electrical contact section 431 relative to the support 41 is limited.

In the mobile phone 100 according to this embodiment of this application, the fixed end 432 is fixedly connected to the support 41, so that the conductive elastic piece 43 can be reliably connected to the support 41. The electrical contact section 431 connected to the fixed end 432 is configured to be in electrical contact with the electrical contact assembly 42, to connect the conductive elastic piece 43 to the electrical contact assembly 42. The connecting end 433 connected to the electrical contact section 431 moves relative to the support 41 to limit the protrusion height of the electrical contact section 431 relative to the support 41.

As shown in FIG. 4 to FIG. 7, in this embodiment, the support 41 is provided with an accommodating groove 411, each of the conductive elastic pieces 43 is located in the accommodating groove 411, and the connecting end 433 is capable of moving in the accommodating groove 411 to limit deformation of the conductive elastic piece 43.

In this embodiment, an extending direction of the accommodating groove 411 may be parallel to the first direction, the conductive elastic pieces 43 are arranged in the accommodating groove 411, and the fixed end 432 of each of the conductive elastic pieces 43 is fixedly connected to the bottom of the accommodating groove 411. The connecting end 433 of each of the conductive elastic pieces 43 moves in the accommodating groove 411 to limit deformation of the conductive elastic piece 43. There are alternatively two or more accommodating grooves 411. The quantity of the accommodating grooves 411 is equal to the quantity of the conductive elastic pieces 43, and one conductive elastic piece 43 is placed in one accommodating groove 411. In this way, it is convenient to install the conductive elastic pieces 43 in the accommodating grooves 411, and the conductive elastic pieces 43 do not affect each other during installation.

In this embodiment, no limitation is imposed on the depth of the accommodating groove 411 in this embodiment, provided that the bending point in the electrical contact section 431 can be in contact with the electrical contact assembly 42 when the accommodating groove 411 accommodates the conductive elastic piece 43. That is, the fixed end 432 and the connecting end 433 of each of the conductive elastic pieces 43 are at least partially located in the accommodating groove 411, and the bending point in the electrical contact section 431 can extend out of the accommodating groove 411 and can be in contact with the electrical contact assembly 42.

In the mobile phone 100 according to this embodiment of this application, the accommodating grooves 411 are provided to accommodate the conductive elastic pieces 43, so that part or all of the fixed end 432 and the connecting end 433 of each of the conductive elastic pieces 43 is located in the accommodating groove 411, and the bending point in the electrical contact section 431 can extend out of the accommodating groove 411. The accommodating grooves 411 are provided to accommodate the conductive elastic pieces 43 and reduce the overall thickness of the mobile phone 100.

In the foregoing embodiment, the conductive elastic piece 43 is divided into the fixed end 432, the electrical contact section 431 and the connecting end 433 that are connected in sequence. The fixed end 432, the electrical contact section 431 and the connecting end 433 have different functions. To facilitate installation of the conductive elastic piece 43 and prevent reverse installation of the conductive elastic piece 43, in this embodiment, the accommodating groove 411 for accommodating the conductive elastic piece 43 is divided into different areas. The different areas of the accommodating groove 411 are described below.

As shown in FIG. 4 to FIG. 7, in this embodiment, the accommodating groove 411 includes a first accommodating part 4111, a guide part 4112 and a second accommodating part 4113 that communicate with each other in sequence, the fixed end 432 is located in the first accommodating part 4111, the fixed end 432 is connected to the first accommodating part 4111, and the connecting end 433 is located in the second accommodating part 4113.

Specifically, the fixed end 432 is configured to be connected to the first accommodating part 4111, so as to reliably connect the fixed end 432 into the first accommodating part 4111. A size of the fixed end 432 can be increased in the conductive elastic piece 43 to increase a contact area between the fixed end 432 and the first accommodating part 4111. That is, a width D1 of the fixed end 432 is greater than a width D2 of the connecting end 433, and the width D2 of the connecting end 433 may be equal to a width D3 of the guide part 4112. Correspondingly, the first accommodating part 4111 matches the fixed end 432, and a size of the first accommodating part 4111 is greater than that of the second accommodating part 4113. The fixed end 432 may be fixedly connected to the first accommodating part 4111 by using a screw, welding or bonding. The fixed end 432 is electrically connected to the first accommodating part 4111, and the camera assembly 30 is electrically connected to the first accommodating part 4111 in the support 41, so as to electrically connect the conductive elastic piece 43 to the camera assembly 30. The connecting end 433 matches the second accommodating part 4113.

In the mobile phone 100 according to this embodiment of this application, the accommodating groove 411 includes a first accommodating part 4111, a guide part 4112 and a second accommodating part 4113 that communicate with each other in sequence, the fixed end 432 is located in the first accommodating part 4111, and the connecting end 433 is located in the second accommodating part 4113. This facilitates installation of the conductive elastic piece 43 and can prevent reverse installation of the conductive elastic piece 43.

An excessively high bending point in the electrical contact section 431 may increase friction in the sliding process of the support 41 and affect smooth sliding of the support 41; and an excessively low bending point in the electrical contact section 431 may cause an insufficient pressure during the operation of the bending point in the electrical contact section 431 and affect conductive stability of the conductive elastic piece 43. Therefore, in this embodiment, the second accommodating part 4113 is internally provided with two extended sections 4114 extending toward opposite sides of the support 41 respectively, two opposite sides of the connecting end 433 are provided with extended buckles 4331, and the extended buckles 4331 are located in the extended sections 4114.

Specifically, the two extended sections 4114 may be disposed in a width direction of the second accommodating part 4113 (that is, a width D2 direction of the connecting end 433), the two extended sections 4114 extend in the width D2 direction of the connecting end 433, and the two extended sections 4114 extend in opposite directions. Two sides of the connecting end 433 are provided with two extended buckles 4331, the extended buckles 4331 extend in the width D2 direction of the connecting end 433, and the two extended buckles 4331 extend in opposite directions. The two extended buckles 4331 may be flush with an end portion of the connecting end 433.

In the mobile phone 100 according to this embodiment of this application, the extended sections 4114 are arranged in the second accommodating part 4113, the connecting end 433 is provided with the extended buckles 4331, and the extended buckles 4331 each are located in the extended section 4114 and match the extended section 4114, so that the extended buckle 4331 can move in the extended section 4114 in the first direction to limit deformation of the conductive elastic piece 43. This enables the support 41 to slide smoothly, and ensures conductive stability of the conductive elastic piece 43.

As shown in FIG. 4 and FIG. 5, in this embodiment, the electrical contact section 431 includes a first inclined part 4311, a first contact part 4312 and a second inclined part 4313 that are connected in sequence. The first contact part 4312 abuts against the electrical contact assembly 42, and the first inclined part 4311 and the second inclined part 4313 are inclined toward the electrical contact assembly 42.

Specifically, the electrical contact section 431 may be formed through bending, the bending point of the electrical contact section 431 is the first contact part 4312, the first contact part 4312 is in contact with the electrical contact assembly 42, the first inclined part 4311 may be connected to the fixed end 432, the second inclined part 4313 may be connected to the connecting end 433, and the first inclined part 4311 and the second inclined part 4313 are inclined toward the electrical contact assembly 42. The first inclined part 4311 and the second inclined part 4313 are arranged on the electrical contact section 431 to serve as a buffer for the conductive elastic piece 43 in the sliding process, so that the first contact part 4312 gradually slides to a position in contact with the electrical contact assembly 42.

An angle at which the first inclined part 4311 is inclined toward the electrical contact assembly 42 and an angle at which the second inclined part 4313 is inclined toward the electrical contact assembly 42 may be the same or different. This is not limited in this embodiment.

Specifically, an included angle A between the first inclined part 4311 and a plane where the fixed end 432 is located is greater than or equal to 10° and less than or equal to 70°, and an included angle B between the second inclined part 4313 and a plane where the fixed end 432 is located is greater than or equal to 10° and less than or equal to 70°. The included angle A between the first inclined part 4311 and the plane where the fixed end 432 is located is an included angle in an anticlockwise direction between the first inclined part 4311 and the plane where the fixed end 432 is located, and the included angle B between the second inclined part 4313 and the plane where the fixed end 432 is located is an included angle in a clockwise direction between the second inclined part 4313 and the plane where the fixed end 432 is located. A larger included angle A and included angle B indicate a better buffering effect on the conductive elastic piece 43 in the sliding process. However, a larger included angle A and included angle B also indicate a corresponding increase in the length of the conductive elastic piece 43.

The first contact part 4312 in the electrical contact section 431 is configured to be in contact with the electrical contact assembly 42. To reduce impedance of the first contact part 4312, the first contact part 4312 is provided with a plating layer for reducing impedance of the first contact part 4312. Impedance (electrical impedance) is the general term for resistance, inductance and capacitance in a circuit that hinder an alternating current. Specifically, a surface of the first contact part 4312 may be electroplated with pure gold or nickel and the like, so as to reduce impedance of the first contact part 4312. The surface of the electrical contact section 431 or the surface of the entire conductive elastic piece 43 may alternatively electroplated with pure gold or nickel. This is not limited in this embodiment.

As shown in FIG. 4 to FIG. 7, in this embodiment, there are two conductive elastic pieces 43, the electrical contact sections 431 of the two conductive elastic pieces 43 face opposite directions, the two conductive elastic pieces 43 are both parallel to the first direction, and a distance between the electrical contact sections 431 of the two conductive elastic pieces 43 is equal to a sliding distance between the first component 300 and the second component 400.

Specifically, the two conductive elastic pieces 43 are located in different accommodating grooves 411 respectively, and the two conductive elastic pieces 43 are parallel to each other. The two conductive elastic pieces 43 may face the same direction, that is, the electrical contact sections 431 of the two conductive elastic pieces 43 may both face the through hole 2221. The two conductive elastic pieces 43 may alternatively face different directions, that is, the electrical contact sections 431 of the two conductive elastic pieces 43 face opposite directions. A relative positional relationship between the two conductive elastic pieces 43 is related to a designed sliding distance of the support 41. Specifically, the distance between the first contact parts 4312 of the two conductive elastic pieces 43 in the first direction is equal to the designed sliding distance of the support 41. That is, the distance between the electrical contact sections 431 of the two conductive elastic pieces 43 is equal to the sliding distance of the camera assembly 30.

The distance between the electrical contact sections 431 of the two conductive elastic pieces 43 may be adjusted through an arrangement of the two conductive elastic pieces 43. A possible arrangement of the two conductive elastic pieces 43 is described with reference to the drawings.

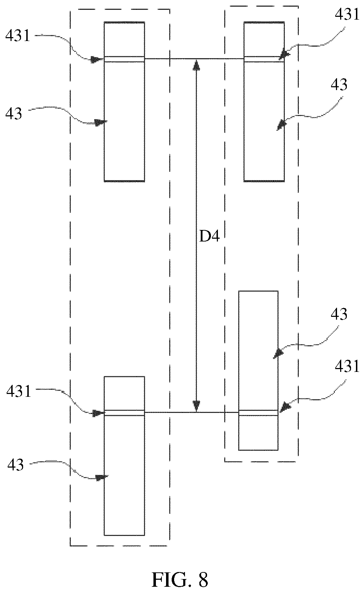

FIG. 8 is an arrangement diagram of conductive elastic pieces in an electronic device according to an embodiment of this application. As shown in FIG. 8, when a distance D4 between the electrical contact sections 431 of the two conductive elastic pieces 43 is fixed, more space of the support 41 is occupied when the two conductive elastic pieces 43 face the same direction compared with when the two conductive elastic pieces 43 face different directions. Therefore, the two conductive elastic pieces 43 are set as facing different directions, which can save the space of the accommodating chamber 23 occupied by the support 41, so that the accommodating chamber 23 of the mobile phone 100 can be used to arrange other parts. In FIG. 8, when the distance D4 between the electrical contact sections 431 of the two conductive elastic pieces 43 is relatively large, there is a distance between the two conductive elastic pieces 43 so as to meet requirements for the distance D4. The two conductive elastic pieces 43 are located on the same straight line, or the two conductive elastic pieces 43 may be staggered.

As shown in FIG. 4 to FIG. 7, when the distance D4 between the electrical contact sections 431 of the two conductive elastic pieces 43 is relatively small, the two conductive elastic pieces 43 need to overlap so as to meet requirements for the distance D4. In this case, the two conductive elastic pieces 43 are staggered in the first direction.

In the foregoing embodiment, when the two conductive elastic pieces 43 are staggered in the first direction, the first contact parts 4313 of the two conductive elastic pieces 43 are in contact with different positions of the electrical contact assembly 42, respectively. In this way, wear of the electrical contact assembly 42 and the conductive elastic piece 43 can be prevented, and service lives of the electrical contact assembly 42 and the conductive elastic piece 43 can be prolonged.

The structure of the electrical contact assembly 42 is described below with reference to drawings and specific embodiments.

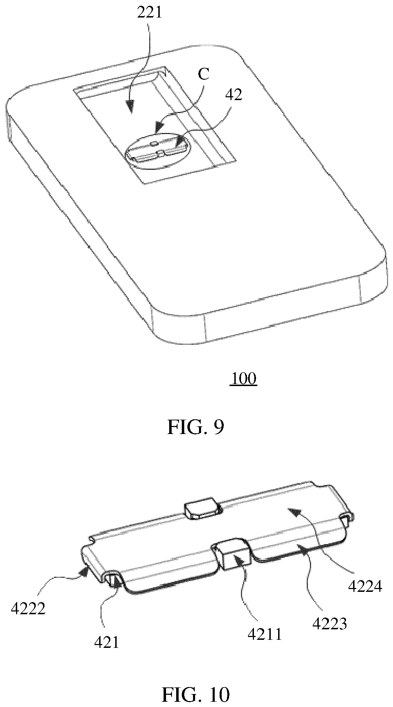

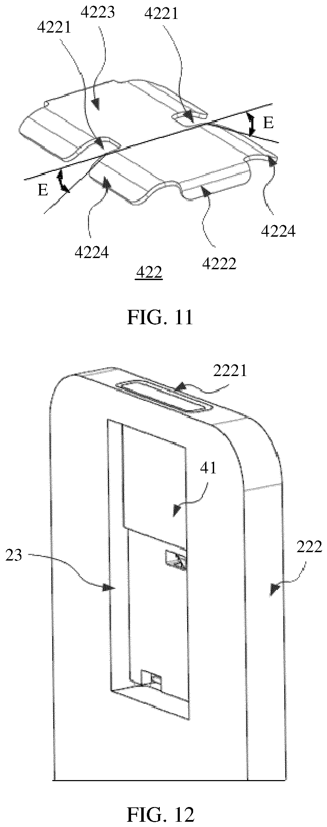

FIG. 9 is a schematic internal structural diagram of a housing in an electronic device according to an embodiment of this application; FIG. 10 is a partial enlarged diagram of a position C in FIG. 9; and FIG. 11 is a schematic structural diagram of a conductive part of an electrical contact assembly in an electronic device according to an embodiment of this application. As shown in FIG. 9 to FIG. 11, in this embodiment, the electrical contact assembly 42 includes a mounting frame 421 and a conductive part 422 connected to the mounting frame 421, the mounting frame 421 is configured to be connected to the first component 300, and each of the electrical contact sections 431 abuts against the conductive part 422.

Specifically, the mounting frame 421 is connected to the metal middle plate 221. The mounting frame 421 may be integrally formed with the metal middle plate 221, or the mounting frame 421 may be welded, bonded, clamped or connected by using a screw to the metal middle plate 221. The mounting frame 421 provides an installation space for the conductive part 422 and supports the conductive part 422. The conductive part 422 may be welded, bonded, clamped or connected by using a screw to the mounting frame 421, so as to reliably connect the conductive part 422 to the mounting frame 421. The conductive part 422 may be a metal sheet.

To facilitate the installation of the conductive member 422 on the mounting frame 421, optionally, in this embodiment, at least one side of the conductive part 422 is provided with at least one positioning notch 4221, and the mounting frame 421 is provided with a positioning part 4211 matching the positioning notch 4221.

There may be two positioning notches 4221. The two positioning notches 4221 may be located at two opposite ends of the conductive part 422. The first positioning notch 4221 is located at a first end of the conductive part 422, and the second positioning notch 4221 is located at a second end of the conductive part 422. The first end of the conductive part 422 is opposite to the second end of the conductive part 422. Correspondingly, the positioning parts 4211 are located at two opposite ends of the mounting frame 421. The positioning parts 4211 each may be a positioning column, and the positioning notches 4221 are clamped on different positioning columns respectively, so as to position the conductive part 422 on the mounting frame 421 through the clamping of the positioning notches 4221 and the positioning columns. The two positioning notches 4221 may be located on two opposite sides of the conductive part 422 respectively. Correspondingly, the positioning parts 4211 are located on two opposite sides of the mounting frame 421. When a length of a side face of the conductive part 422 is greater than a length of an end portion of the conductive part 422, the positioning part 4211 is located on a middle portion of the side face of the conductive part 422. When the length of the side face of the conductive part 422 is less than the length of the end portion of the conductive part 422, the positioning part 4211 is located on a middle portion of the end portion of the conductive part 422. The positioning part 4211 is disposed on the middle portion of the end portion of the conductive part 422 or the middle portion of the side face of the conductive part 422, so that the conductive part 422 can be uniformly stressed.

Optionally, the conductive part 422 is provided with at least one bent part 4222 bent toward the mounting frame 421, and each of the bent parts 4222 abuts against an end portion of the mounting frame 421 when the conductive part 422 is connected to the mounting frame 421. There may be two bent parts 4222. The bent parts 4222 abut against two ends of the mounting frame 421 respectively to limit movement of the conductive part 422 in a direction of a line connecting two ends of the mounting frame 421. In this case, to prevent interference between the positioning part 4211 and the bent part 4222, the positioning part 4211 is located on the side face of the conductive part 422, that is, the positioning notch 4221 and the bent part 4222 on the conductive part 422 are located on different sides of the conductive part 422 respectively. This can limit movement of the conductive part 422 in a direction of a line connecting the two positioning parts 4211.

Optionally, the conductive part 422 includes a second contact part 4223 and guide edges 4224 each connected to an edge of the second contact part 4223, each of the first contact parts 4312 abuts against the second contact part 4223, the guide edge 4224 is inclined toward the mounting frame 421, and an extension direction of the guide edge 4224 is perpendicular to the first direction. The sliding direction of the support 41 and the direction of contact between the conductive part 422 and the conductive elastic piece 43 are designed to be two directions perpendicular to each other, which can effectively ensure that an operation height of the conductive elastic piece 43 is stable and ensure stable electrical connection. The material of the conductive part 422 may be copper alloy or stainless steel. Because each of the first contact part 4312 abuts against the second contact part 4223, a plating layer for reducing impedance of the conductive part 422 may be disposed on the surface of the conductive part 422. Specifically, the surface of the conductive part 422 may be electroplated with pure gold or nickel and the like, so as to reduce impedance of the conductive part 422. The positioning notch 4221, the bent part 4222, the second contact part 4223 and the guide edge 4224 may be formed through stamping. That is, the conductive part 422 is formed through stamping. After the stamping of the conductive part 422 is completed, the surface of the conductive part 422 needs to be polished to reduce friction received by the first contact part 4312 during sliding.

Optionally, there are at least two guide edges 4224, the guide edges 4224 are located on opposite sides of the second contact part 4223 respectively, the positioning notches 4221 are located on the guide edges 4224, and an included angle between each of the guide edges 4224 and the second contact part 4223 is 10°-70°. The guide edges 4224 are disposed on the two opposite sides of the second contact part 4223, and a buffer slope of each of the guide edges 4224 serves as a buffer for the conductive elastic piece 43 during relative movement. An included angle E between each of the guide edges 4224 and the second contact part 4223 is greater than or equal to 10° and less than or equal to 70°. A larger included angle between the guide edge 4224 and the second contact part 4223 indicates a better buffering effect, but indicates a corresponding increase in the size of the conductive part 422. An arc is arranged at an intersection of the second contact part 4223 and the guide edge 4224. The arc can also buffer the conductive elastic piece 43 in a relative movement process, which prevents scratching in the sliding process, thereby prolonging the service life of the conductive elastic piece 43.

The following describes the contact between the conductive elastic piece 43 and the electrical contact assembly 42 at different positions during the sliding with reference to specific drawings.

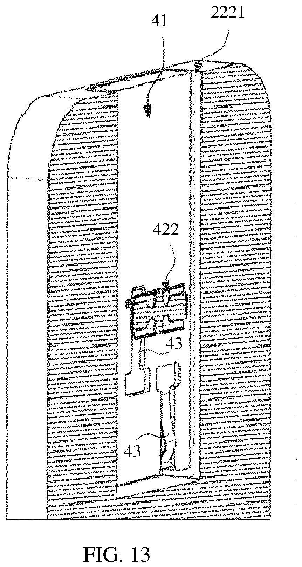

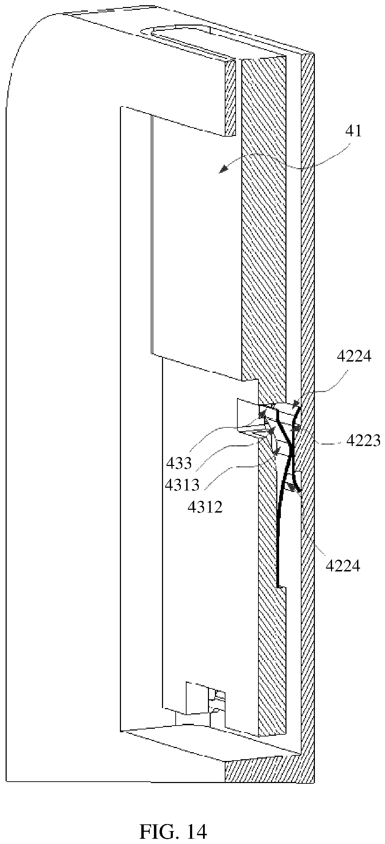

FIG. 12 is a first schematic diagram of a first state of a conductive elastic piece and an electrical contact assembly in an electronic device according to an embodiment of this application; FIG. 13 is a second schematic diagram of a first state of a conductive elastic piece and an electrical contact assembly in an electronic device according to an embodiment of this application; and FIG. 14 is a third schematic diagram of a first state of a conductive elastic piece and an electrical contact assembly in an electronic device according to an embodiment of this application. As shown in FIG. 5 and FIG. 11 to FIG. 14, the support 41 is located in the accommodating chamber 23, and an upper end face of the support 41 is flush with an outer surface of the middle frame 22. This state may be called a first state of the support 41 or an initial state of the support 41. The first contact part 4312 in the first conductive elastic piece 43 is in contact with the second contact part 4223 of the conductive part 422 in the electrical contact assembly 42 to provide stable current conduction support. In the process of sliding the support 41 toward the outside of the accommodating chamber 23, the first contact part 4312 in the first conductive elastic piece 43 first slides on a plane of the second contact part 4223, and after the first contact part 4312 slides out the plane of the second contact part 4223, the second inclined part 4313 of the first contact part 4312 in the first conductive elastic piece 43 continues to be in contact with the guide edge 4224 of the electrical contact assembly 42. In the process, due to the existence of the second inclined part 4313, the guide edge 4224 and the arc at the intersection of the second contact part 4223 and the guide edge 4224, the first conductive elastic piece 43 slides smoothly, and the first conductive elastic piece 43 has no sudden deformation, thereby guaranteeing the service life of the first conductive elastic piece 43. In this case, the second conductive elastic piece 43 is suspended in the foregoing process and is not in contact with the electrical contact assembly 42.

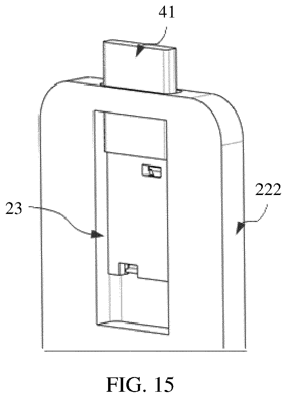

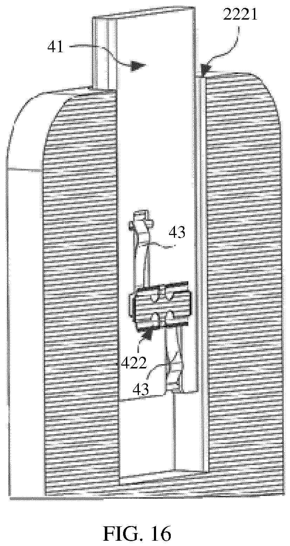

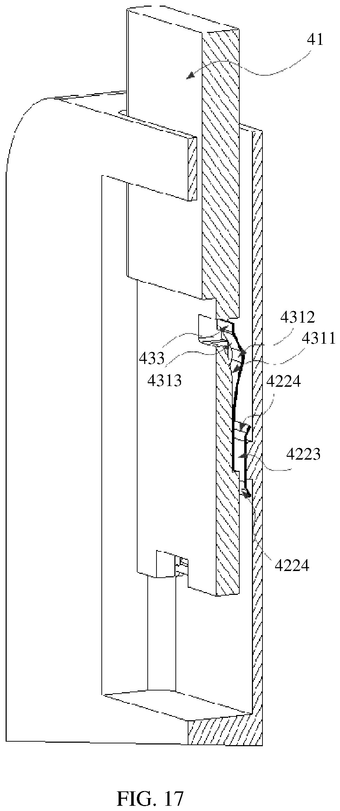

FIG. 15 is a first schematic diagram of a second state of a conductive elastic piece and an electrical contact assembly in an electronic device according to an embodiment of this application; FIG. 16 is a second schematic diagram of a second state of a conductive elastic piece and an electrical contact assembly in an electronic device according to an embodiment of this application; and FIG. 17 is a third schematic diagram of a second state of a conductive elastic piece and an electrical contact assembly in an electronic device according to an embodiment of this application. As shown in FIG. 5, FIG. 11 and FIG. 15 to FIG. 17, the support 41 continues to slide toward the outside of the accommodating chamber 23, and the first conductive elastic piece 43 is out of contact with the conductive part 422 in the electrical contact assembly 42.

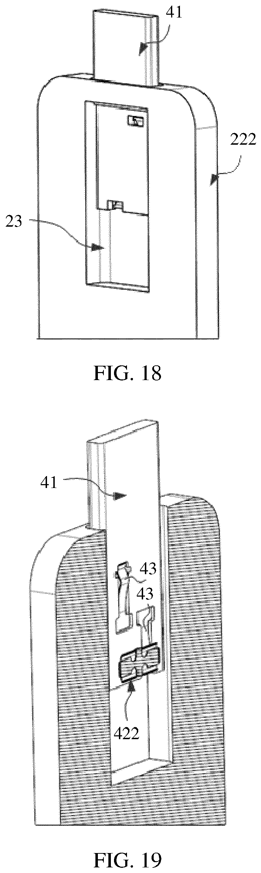

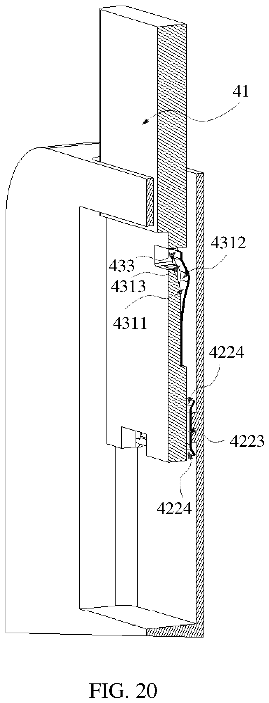

FIG. 18 is a first schematic diagram of a third state of a conductive elastic piece and an electrical contact assembly in an electronic device according to an embodiment of this application; FIG. 19 is a second schematic diagram of a third state of a conductive elastic piece and an electrical contact assembly in an electronic device according to an embodiment of this application; and FIG. 20 is a third schematic diagram of a third state of a conductive elastic piece and an electrical contact assembly in an electronic device according to an embodiment of this application. As shown in FIG. 18 to FIG. 20, when the support 41 continues to slide until the camera assembly 30 extends out of the accommodating chamber 23, the first contact part 4312 in the second conductive elastic piece 43 is in contact with the second contact part 4223 of the conductive part 422 in the electrical contact assembly 42 to provide stable current conduction support. This state may be called a second state of the support 41 or an end state of the support 41. In the process of sliding the support 41 toward the outside of the accommodating chamber 23, the first contact part 4312 in the second conductive elastic piece 43 first slides on a plane of the second contact part 4223, and after the first contact part 4312 slides out the plane of the second contact part 4223, the second inclined part 4313 of the first contact part 4312 in the second conductive elastic piece 43 continues to be in contact with the guide edge 4224 of the electrical contact assembly 42. In the process, due to the existence of the second inclined part 4313, the guide edge 4224 and the arc at the intersection of the second contact part 4223 and the guide edge 4224, the second conductive elastic piece 43 slides smoothly and has no sudden deformation, thereby guaranteeing the service life of the second conductive elastic piece 43. In this case, the first conductive elastic piece 43 is suspended in the foregoing process and is not in contact with the electrical contact assembly 42.

When the support 41 slides from the outside of the accommodating chamber 23 to the inside of the accommodating chamber 23, the relative positional relationship between the conductive elastic piece 43 and the conductive part 422 is the same as above. Details are not described in this embodiment again. During sliding of the support 41, the conductive elastic piece 43 is not in contact with the conductive part 422. In the sliding initial state or end state of the support 41, only one conductive elastic piece 43 is in stable contact with the conductive part 422, and the other conductive elastic piece 43 is not in contact with the conductive part 422. Due to the limiting effect of the extended buckle 4331 and the extended section 4114 in the first conductive elastic piece 43, in addition to the sliding initial state or the end state of the support 41, the two conductive elastic pieces 43 are always not in contact with the metal middle plate 221 or the conductive part 422 during sliding of the support 41, so as to prevent unstable electrical connection during the sliding of the support 41.

### Embodiment 2

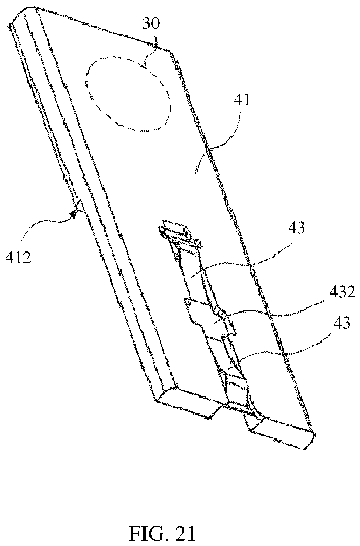

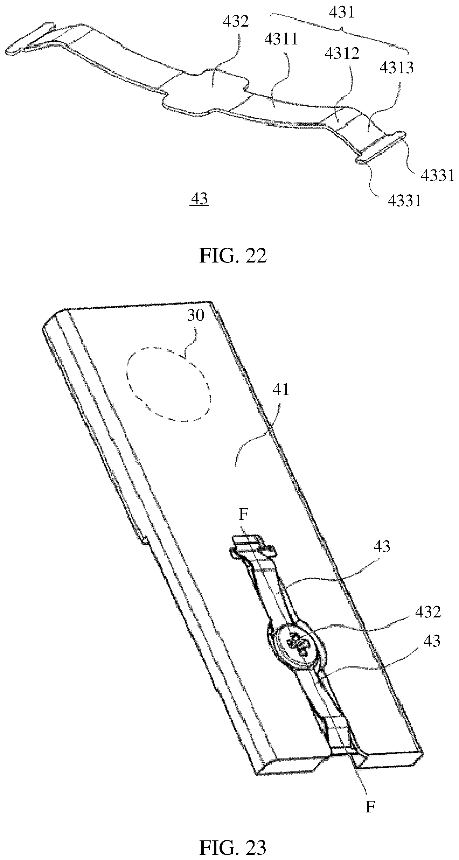

FIG. 21 is a schematic structural diagram of a conductive elastic piece and a support in an electronic device according to another embodiment of this application; and FIG. 22 is a schematic structural diagram of a conductive elastic piece in an electronic device according to another embodiment of this application. As shown in FIG. 21 and FIG. 22, this embodiment provides a mobile phone 100 based on Embodiment 1. The structure of this embodiment is different from the structure of the conductive elastic piece 43 and the accommodating groove 411 in the mobile phone 100 in Embodiment 1, and the rest of the structure is the same. The part of this embodiment the same as that of Embodiment 1 is described in detail in Embodiment 1. Details are not described in this embodiment again.

In this embodiment, two conductive elastic pieces 43 are located on the same straight line. The two conductive elastic pieces 43 are symmetrically disposed, and fixed ends 432 of the two conductive elastic pieces 43 are connected to each other. Correspondingly, first accommodating parts 4111 of the two accommodating grooves 411, which are configured to accommodate the fixed ends 432, are connected to each other. The two conductive elastic pieces 43 are integrated, so that the two conductive elastic pieces 43 may be integrally formed, which facilitates machining of the two conductive elastic pieces 43. Compared with Embodiment 1, this embodiment saves parts in the mobile phone 100 and space.

### Embodiment 3

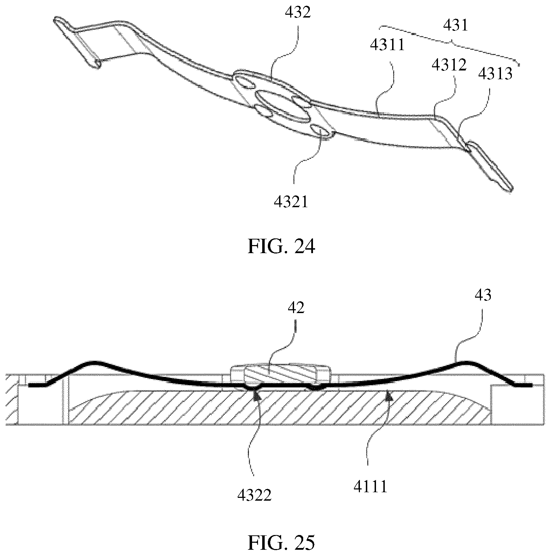

FIG. 23 is a schematic structural diagram of a conductive elastic piece and a support in an electronic device according to another embodiment of this application; FIG. 24 is a schematic structural diagram of a conductive elastic piece in an electronic device according to another embodiment of this application; and FIG. 25 is a cross-sectional view taken along F-F in FIG. 23. As shown in FIG. 23 to FIG. 25, this embodiment provides a mobile phone 100 based on Embodiment 1. The structure of this embodiment is different from the structure of the conductive elastic piece 43 and the accommodating groove 411 in the mobile phone 100 in Embodiment 1, and the rest of the structure is the same. The part of this embodiment the same as that of Embodiment 1 is described in detail in Embodiment 1. Details are not described in this embodiment again.

In this embodiment, two conductive elastic pieces 43 are located on the same straight line. The two conductive elastic pieces 43 are symmetrically disposed, and fixed ends 432 of the two conductive elastic pieces 43 are connected to each other. Correspondingly, first accommodating parts 4111 of the two accommodating grooves 411, which are configured to accommodate the fixed ends 432, are connected to each other. The two conductive elastic pieces 43 are integrated, so that the two conductive elastic pieces 43 may be integrally formed, which facilitates machining of the two conductive elastic pieces 43. Compared with Embodiment 1, this embodiment saves parts in the mobile phone 100 and space.

The fixed end 432 may be rectangular, annular or circular, and the first accommodating part 4111 in the corresponding accommodating groove 411 is also rectangular or circular. The fixed end 432 is provided with a mounting hole 4321, and the first accommodating part 4111 is provided with a blind hole, and a screw runs through the mounting hole 4321 and is screwed into the blind hole to connect the conductive elastic piece 43 into the accommodating groove 411. There may be two or more mounting holes 4321, and the mounting holes 4321 are uniformly spaced, so that the conductive elastic piece 43 is stably connected in the accommodating groove 411.

A surface of each of the mounting holes 4321 facing the first accommodating part 4111 is provided with at least one protruding point 4322, and each protruding point 4322 may be formed by stamping. A face of the protruding point 4322 in contact with the first accommodating part 4111 may be electroplated with pure gold or nickel to reduce impedance of a contact point between the protruding point 4322 and the first accommodating part 4111. Through overvoltage contact between the protruding point 4322 and the support 41, connection between the conductive elastic piece 43 and the support 41 is implemented, thereby facilitating connection between the conductive elastic piece 43 and the camera assembly 30 on the support 41.

In the mobile phone 100 according to this embodiment, the two conductive elastic pieces 43 are integrated, so that the two conductive elastic pieces 43 may be integrally formed, which facilitates machining of the two conductive elastic pieces 43. Compared with Embodiment 1, this embodiment saves parts in the mobile phone 100 and space.

### Embodiment 4

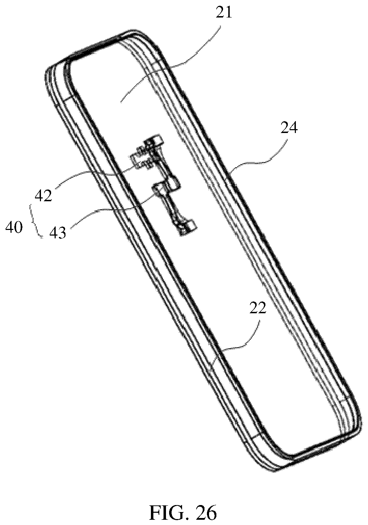

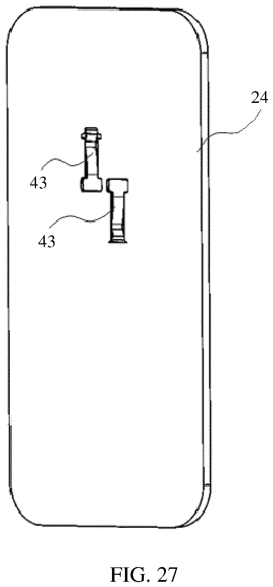

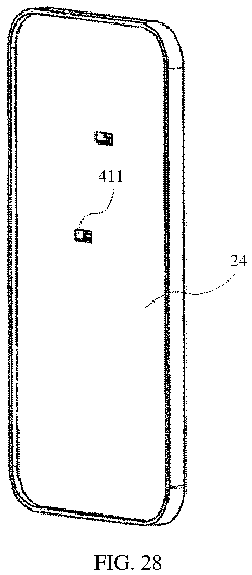

FIG. 26 is a schematic internal structural diagram of an electronic device according to an embodiment of this application; FIG. 27 is a schematic structural diagram of a middle frame in an electronic device according to an embodiment of this application; and FIG. 28 is a schematic structural diagram of a middle frame in another direction in an electronic device according to an embodiment of this application. As shown in FIG. 26 to FIG. 28, this embodiment provides a mobile phone 100 on the basis of any of the foregoing embodiments, and the elastic piece assembly 40 in any of the foregoing embodiments can be applied to the mobile phone 100 which slides as a whole.

Specifically, a housing 20 of the mobile phone 100 includes a sliding housing 24, a middle frame 22, and a rear cover 21. The rear cover 21 is connected to the middle frame 22, and the sliding housing 24 slides relative to the rear cover 21 or the middle frame 22. That is, the first component 300 is the middle frame 22 or the rear cover 21, and the second component 400 is the sliding housing 24. The support 41 does not need to be provided, the accommodating groove 411 is located on the sliding housing 24, the two conductive elastic pieces 43 are connected to the sliding housing 24, and the electrical contact assembly 42 is located on the middle frame 22. The sliding housing 24 slides relative to the rear cover 21 or the middle frame 22, and a stable electrical connection between the middle frame 22 and the sliding housing 24 is realized through contact between the conductive elastic pieces 43 and the electrical contact assembly 42. Similarly, the first component 300 may alternatively be the sliding housing 24, and the second component 400 may be the middle frame 22 or the rear cover 21. This is not limited in this embodiment.

In this embodiment, the support 41 is not provided, the two conductive elastic pieces 43 are connected to the sliding housing 24, and the electrical contact assembly 42 is located on the middle frame 22. The rest of the structure is the same as that of any of the foregoing embodiments. The part of this embodiment the same as that of any of the foregoing embodiments is described in detail in the foregoing embodiment. Details are not described in this embodiment again.

It should be noted that the elastic piece assembly 40 in the foregoing embodiment is not limited to a mobile phone 100 that is provided with a slidable camera assembly 30 or slides as a whole, and can also be used for other slidable structures inside the mobile phone 100, such as grounding of lines in the mobile phone 100. Details are not described in this embodiment again.

## Claims

1. An elastic piece assembly (40) applied to an electronic device (100), wherein the electronic device (100) comprises a first component (300) and a second component (400) that are capable of sliding relatively in a first direction, and the elastic piece assembly (40) comprises a support (41), an electrical contact assembly (42), and two conductive elastic pieces (43):
the electrical contact assembly (42) is configured to be connected to the first component (300), and the support (41) is configured to be connected to the second component (400); and
two ends (432, 433) of each of the conductive elastic pieces (43) are connected to the support (41), the conductive elastic piece (43) is provided with an electrical contact section (431) bent toward the electrical contact assembly (42), and the electrical contact section (431) is located between two end portions of the conductive elastic piece (43); the conductive elastic pieces (43) are separately and sequentially arranged in the first direction, and when the first component (300) and the second component (400) slide relatively, the electrical contact assembly (42) abuts against the electrical contact sections (431) of one of conductive elastic pieces (43) to connect the electrical contact assembly (42) to the conductive elastic pieces (43);
wherein the electrical contact section (431) comprises a first inclined part (4311), a first contact part (4312) and a second inclined part (4313) that are connected in sequence, the first contact part (4312) abuts against the electrical contact assembly (42), and the first inclined part (4311) and the second inclined part (4313) are inclined toward the electrical contact assembly (42),
wherein the conductive elastic pieces (43) each comprise a fixed end (432) fixedly connected to the support (41) and a connecting end (433) movably connected to the support (41), and the electrical contact section (431) protrudes toward the electrical contact assembly (42); and
the connecting end (433) is capable of moving relative to the support (41) to limit a protrusion height of the electrical contact section (431) relative to the support (41),
wherein the electrical contact sections (431) of the two conductive elastic pieces (43) face opposite directions, the two conductive elastic pieces (43) are parallel to the first direction, and a distance between the electrical contact sections (431) of the two conductive elastic pieces (43) is equal to a sliding distance between the first component (300) and the second component (400), and
wherein the two conductive elastic pieces (43) are staggered in the first direction.

2. The elastic piece assembly according to claim 1, wherein the support is provided with an accommodating groove (411), each of the conductive elastic pieces is located in the accommodating groove (411), and the connecting end is capable of moving in the accommodating groove (411) to limit deformation of the conductive elastic piece.

3. The elastic piece assembly according to claim 2, wherein the accommodating groove comprises a first accommodating part (4111), a guide part (4112) and a second accommodating part (4113) that communicate with each other in sequence, the fixed end is located in the first accommodating part (4111), the fixed end is connected to the first accommodating part (4111), and the connecting end is located in the second accommodating part (4113).

4. The elastic piece assembly according to claim 3, wherein the second accommodating part is internally provided with two extended sections (4114) extending toward opposite sides of the support respectively, two opposite sides of the connecting end are provided with extended buckles (4331), and the extended buckles (4331) are located in the extended sections (4114).

5. The elastic piece assembly according to claim 1, wherein the first contact part is provided with a plating layer for reducing impedance of the first contact part.

6. The elastic piece assembly according to any one of claims 1 to 4, wherein the electrical contact assembly comprises a mounting frame (421) and a conductive part (422) connected to the mounting frame (421), the mounting frame (421) is configured to be connected to the first component, and each of the electrical contact sections abuts against the conductive part;
wherein at least one side of the conductive part is provided with at least one positioning notch (4221), and the mounting frame (421) is provided with a positioning part (4211) matching the positioning notch (4221).

7. The elastic piece assembly according to claim 6, wherein the conductive part is provided with at least one bent part (4222) bent toward the mounting frame, and each of the bent parts (4222) abuts against an end portion of the mounting frame when the conductive part is connected to the mounting frame.

8. The elastic piece assembly according to claim 6, wherein the conductive part comprises a second contact part (4223) and guide edges (4224) each connected to an edge of the second contact part (4223), each of the first contact parts abuts against the second contact part (4223), the guide edge (4224) is inclined toward the mounting frame, and an extension direction of the guide edge (4224) is perpendicular to the first direction.

9. The elastic piece assembly according to claim 8, wherein there are at least two guide edges (4224), the guide edges (4224) are located on opposite sides of the second contact part respectively, and an included angle between each of the guide edges (4224) and the second contact part is 10°-70°.

10. An electronic device (100) with an elastic piece assembly (40), comprising a first component (300), a second component (400) and the elastic piece assembly (40) according to any one of claims 1 to 9, wherein the first component (300) is connected to the second component (400) by using the elastic piece assembly (40).

11. The electronic device with an elastic piece assembly according to claim 10, wherein the first component is a camera assembly (30) and the second component is a middle frame (22); or the first component is a middle frame (22) and the second component is a camera assembly (30); or wherein the first component is a sliding housing (24) and the second component is a fixed housing; or the first component is a fixed housing and the second component is a sliding housing (24).

## Patentansprüche

1. Anordnung (40) von elastischen Stücken, die an einer elektronischen Vorrichtung (100) angewendet wird, wobei die elektronische Vorrichtung (100) eine erste Komponente (300) und eine zweite Komponente (400) umfasst, die in der Lage sind, relativ in einer ersten Richtung zu gleiten, und die Anordnung (40) von elastischen Stücken einen Träger (41), eine elektrische Kontaktanordnung (42) und zwei leitfähige elastische Stücke (43) umfasst,
wobei die elektrische Kontaktanordnung (42) konfiguriert ist, um mit der ersten Komponente (300) verbunden zu werden, und der Träger (41) konfiguriert ist, um mit der zweiten Komponente (400) verbunden zu werden, und
wobei zwei Enden (432, 433) von jedem der leitfähigen elastischen Stücke (43) mit dem Träger (41) verbunden sind, das leitfähige elastische Stück (43) mit einem elektrischen Kontaktbereich (431) versehen ist, der in Richtung der elektrischen Kontaktanordnung (42) gebogen ist, und sich der elektrische Kontaktbereich (431) zwischen zwei Endabschnitten des leitfähigen elastischen Stücks (43) befindet, wobei die leitfähigen elastischen Stücke (43) separat und nacheinander in der ersten Richtung angeordnet sind, und wenn die erste Komponente (300) und die zweite Komponente (400) relativ gleiten, die elektrische Kontaktanordnung (42) an den elektrischen Kontaktbereichen (431) von einem der leitfähigen elastischen Stücke (43) anliegt, um die elektrische Kontaktanordnung (42) mit den leitfähigen elastischen Stücken (43) zu verbinden;
wobei der elektrische Kontaktbereich (431) einen ersten geneigten Teil (4311), einen ersten Kontaktteil (4312) und einen zweiten geneigten Teil (4313) umfasst, die der Reihe nach verbunden sind, wobei der erste Kontaktteil (4312) an der elektrischen Kontaktanordnung (42) anliegt, und der erste geneigte Teil (4311) und der zweite geneigte Teil (4313) in Richtung der elektrischen Kontaktanordnung (42) geneigt sind,
wobei die leitfähigen elastischen Stücke (43) jeweils ein festes Ende (432), das fest mit dem Träger (41) verbunden ist, und ein Verbindungsende (433), das beweglich mit dem Träger (41) verbunden ist, umfassen, und der elektrische Kontaktbereich (431) in Richtung der elektrischen Kontaktanordnung (42) vorspringt; und
wobei das Verbindungsende (433) in der Lage ist, sich relativ zu dem Träger (41) zu bewegen, um eine Vorsprungshöhe des elektrischen Kontaktbereichs (431) relativ zu dem Träger (41) zu begrenzen,
wobei die elektrischen Kontaktbereiche (431) der zwei leitfähigen elastischen Stücke (43) in entgegengesetzte Richtungen weisen, die zwei leitfähigen elastischen Stücke (43) parallel zu der ersten Richtung liegen und ein Abstand zwischen den elektrischen Kontaktbereichen (431) der zwei leitfähigen elastischen Stücke (43) gleich einem Gleitabstand zwischen der ersten Komponente (300) und der zweiten Komponente (400) ist, und
wobei die zwei leitfähigen elastischen Stücke (43) in der ersten Richtung versetzt sind.

2. Anordnung von elastischen Stücken nach Anspruch 1, wobei der Träger mit einer Aufnahmenut (411) versehen ist, wobei sich jedes der leitfähigen elastischen Stücke in der Aufnahmenut (411) befindet, und das Verbindungsende in der Lage ist, sich in der Aufnahmenut (411) zu bewegen, um eine Verformung des leitfähigen elastischen Stücks zu begrenzen.

3. Anordnung von elastischen Stücken nach Anspruch 2, wobei die Aufnahmenut einen ersten Aufnahmeteil (4111), einen Führungsteil (4112) und einen zweiten Aufnahmeteil (4113) umfasst, die miteinander der Reihe nach kommunizieren, wobei sich das feste Ende in dem ersten Aufnahmeteil (4111) befindet, das feste Ende mit dem ersten Aufnahmeteil (4111) verbunden ist und sich das Verbindungsende in dem zweiten Aufnahmeteil (4113) befindet.

4. Anordnung von elastischen Stücken nach Anspruch 3, wobei der zweite Aufnahmeteil innen mit zwei erweiterten Bereichen (4114) versehen ist, die sich jeweils in Richtung entgegengesetzter Seiten des Trägers erstrecken, zwei entgegengesetzte Seiten des Verbindungsendes mit erweiterten Schnallen (4331) versehen sind und sich die erweiterten Schnallen (4331) in den erweiterten Bereichen (4114) befinden.

5. Anordnung von elastischen Stücken nach Anspruch 1, wobei der erste Kontaktteil mit einer Beschichtungsschicht zum Reduzieren einer Impedanz des ersten Kontaktteils versehen ist.

6. Anordnung von elastischen Stücken nach einem der Ansprüche 1 bis 4, wobei die elektrische Kontaktanordnung einen Montagerahmen (421) und einen mit dem Montagerahmen (421) verbundenen leitfähigen Teil (422) umfasst, wobei der Montagerahmen (421) konfiguriert ist, um mit der ersten Komponente verbunden zu werden, und jeder der elektrischen Kontaktbereiche an dem leitfähigen Teil anliegt,
wobei mindestens eine Seite des leitfähigen Teils mit mindestens einer Positionierungskerbe (4221) versehen ist und der Montagerahmen (421) mit einem Positionierungsteil (4211) versehen ist, der der Positionierungskerbe (4221) entspricht.

7. Anordnung von elastischen Stücken nach Anspruch 6, wobei der leitfähige Teil mit mindestens einem gebogenen Teil (4222) versehen ist, der in Richtung des Montagerahmens gebogen ist, und jeder der gebogenen Teile (4222) an einem Endabschnitt des Montagerahmens anliegt, wenn der leitfähige Teil mit dem Montagerahmen verbunden ist.

8. Anordnung von elastischen Stücken nach Anspruch 6, wobei der leitfähige Teil einen zweiten Kontaktteil (4223) und Führungskanten (4224), die jeweils mit einer Kante des zweiten Kontaktteils (4223) verbunden sind, umfasst, wobei jeder der ersten Kontaktteile an dem zweiten Kontaktteil (4223) anliegt, wobei die Führungskante (4224) in Richtung des Montagerahmens geneigt ist und eine Erstreckungsrichtung der Führungskante (4224) senkrecht zu der ersten Richtung ist.

9. Anordnung von elastischen Stücken nach Anspruch 8, wobei mindestens zwei Führungskanten (4224) vorhanden sind, wobei sich die Führungskanten (4224) jeweils auf entgegengesetzten Seiten des zweiten Kontaktteils befinden, und ein eingeschlossener Winkel zwischen jeder der Führungskanten (4224) und dem zweiten Kontaktteil 10°-70° beträgt.

10. Elektronische Vorrichtung (100) mit einer Anordnung (40) von elastischen Stücken, umfassend eine erste Komponente (300), eine zweite Komponente (400) und die Anordnung (40) von elastischen Stücken nach einem der Ansprüche 1 bis 9, wobei die erste Komponente (300) unter Verwendung der Anordnung (40) von elastischen Stücken mit der zweiten Komponente (400) verbunden ist.

11. Elektronische Vorrichtung mit einer Anordnung von elastischen Stücken nach Anspruch 10, wobei die erste Komponente eine Kameraanordnung (30) ist und die zweite Komponente ein mittlerer Rahmen (22) ist; oder die erste Komponente ein mittlerer Rahmen (22) ist und die zweite Komponente eine Kameraanordnung (30) ist; oder wobei die erste Komponente ein gleitendes Gehäuse (24) ist und die zweite Komponente ein festes Gehäuse ist; oder die erste Komponente ein festes Gehäuse ist und die zweite Komponente ein gleitendes Gehäuse (24) ist.

## Revendications

1. Ensemble pièce élastique (40) appliqué à un dispositif électronique (100), dans lequel le dispositif électronique (100) comprend un premier composant (300) et un second composant (400) qui sont capables de coulisser relativement dans une première direction, et l'ensemble pièce élastique (40) comprend un support (41), un ensemble contact électrique (42), et deux pièces élastiques conductrices (43) ;
l'ensemble contact électrique (42) est conçu pour être raccordé au premier composant (300), et le support (41) est conçu pour être raccordé au second composant (400) ; et
deux extrémités (432, 433) de chacune des pièces élastiques conductrices (43) sont raccordées au support (41), la pièce élastique conductrice (43) est pourvue d'une section contact électrique (431) courbée vers l'ensemble contact électrique (42), et la section contact électrique (431) est située entre deux portions d'extrémité de la pièce élastique conductrice (43) ; les pièces élastiques conductrices (43) sont agencées séparément et séquentiellement dans la première direction, et lorsque le premier composant (300) et le second composant (400) coulissent relativement, l'ensemble contact électrique (42) vient en butée contre les sections contact électrique (431) de l'une des pièces élastiques conductrices (43) pour raccorder l'ensemble contact électrique (42) aux pièces élastiques conductrices (43) ;
dans lequel la section contact électrique (431) comprend une première partie inclinée (4311), une première partie contact (4312) et une seconde partie inclinée (4313) qui sont raccordées en séquence, la première partie contact (4312) vient en butée contre l'ensemble contact électrique (42), et la première partie inclinée (4311) et la seconde partie inclinée (4313) sont inclinées vers l'ensemble contact électrique (42),
dans lequel les pièces élastiques conductrices (43) comprennent chacune une extrémité fixe (432) raccordée de manière fixe au support (41) et une extrémité de raccordement (433) raccordée de manière déplaçable au support (41), et la section contact électrique (431) fait saillie vers l'ensemble contact électrique (42) ; et
l'extrémité de raccordement (433) est capable de se déplacer par rapport au support (41) pour limiter une hauteur de saillie de la section contact électrique (431) par rapport au support (41),
dans lequel les sections contact électrique (431) des deux pièces élastiques conductrices (43) font face à des directions opposées, les deux pièces élastiques conductrices (43) sont parallèles à la première direction, et une distance entre les sections contact électrique (431) des deux pièces élastiques conductrices (43) est égale à une distance de coulissement entre le premier composant (300) et le second composant (400), et
dans lequel les deux pièces élastiques conductrices (43) sont décalées dans la première direction.

2. Ensemble pièce élastique selon la revendication 1, dans lequel le support est pourvu d'une rainure de logement (411), chacune des pièces élastiques conductrices est située dans la rainure de logement (411), et l'extrémité de raccordement est capable de se déplacer dans la rainure de logement (411) pour limiter une déformation de la pièce élastique conductrice.

3. Ensemble pièce élastique selon la revendication 2, dans lequel la rainure de logement comprend une première partie de logement (4111), une partie de guidage (4112) et une seconde partie de logement (4113) qui communiquent entre elles en séquence, l'extrémité fixe est située dans la première partie de logement (4111), l'extrémité fixe est raccordée à la première partie de logement (4111), et l'extrémité de raccordement est située dans la seconde partie de logement (4113).

4. Ensemble pièce élastique selon la revendication 3, dans lequel la seconde partie de logement est pourvue intérieurement de deux sections étendues (4114) s'étendant vers des côtés opposés du support respectivement, deux côtés opposés de l'extrémité de raccordement sont pourvus de boucles étendues (4331), et les boucles étendues (4331) sont situées dans les sections étendues (4114).

5. Ensemble pièce élastique selon la revendication 1, dans lequel la première partie contact est pourvue d'une couche de placage pour la réduction de l'impédance de la première partie contact.

6. Ensemble pièce élastique selon l'une quelconque des revendications 1 à 4, dans lequel l'ensemble contact électrique comprend un cadre de montage (421) et une partie conductrice (422) raccordée au cadre de montage (421), le cadre de montage (421) est conçu pour être raccordé au premier composant, et chacune des sections contact électrique vient en butée contre la partie conductrice ;
dans lequel au moins un côté de la partie conductrice est pourvu d'au moins une encoche de positionnement (4221), et le cadre de montage (421) est pourvu d'une partie de positionnement (4211) correspondant à l'encoche de positionnement (4221).

7. Ensemble pièce élastique selon la revendication 6, dans lequel la partie conductrice est pourvue d'au moins une partie courbée (4222) courbée vers le cadre de montage, et chacune des parties courbées (4222) vient en butée contre une portion d'extrémité du cadre de montage lorsque la partie conductrice est raccordée au cadre de montage.

8. Ensemble pièce élastique selon la revendication 6, dans lequel la partie conductrice comprend une seconde partie contact (4223) et des bords de guidage (4224) raccordés chacun à un bord de la seconde partie contact (4223), chacune des premières parties contact vient en butée contre la seconde partie contact (4223), le bord de guidage (4224) est incliné vers le cadre de montage, et une direction d'extension du bord de guidage (4224) est perpendiculaire à la première direction.

9. Ensemble pièce élastique selon la revendication 8, dans lequel il y a au moins deux bords de guidage (4224), les bords de guidage (4224) sont situés sur des côtés opposés de la seconde partie contact respectivement, et un angle inclus entre chacun des bords de guidage (4224) et la seconde partie contact est de 10° à 70°.

10. Dispositif électronique (100) avec un ensemble pièce élastique (40), comprenant un premier composant (300), un second composant (400) et l'ensemble pièce élastique (40) selon l'une quelconque des revendications 1 à 9, dans lequel le premier composant (300) est raccordé au second composant (400) à l'aide de l'ensemble pièce élastique (40).

11. Dispositif électronique avec un ensemble pièce élastique selon la revendication 10, dans lequel le premier composant est un ensemble appareil de prise de vues (30) et le second composant est un cadre central (22) ; ou le premier composant est un cadre central (22) et le second composant est un ensemble appareil de prise de vues (30) ; ou dans lequel le premier composant est un boîtier de coulissement (24) et le second composant est un boîtier fixe ; ou le premier composant est un boîtier fixe et le second composant est un boîtier de coulissement (24).
